# EUROPEAN PATENT SPECIFICATION

(11) **EP 3 508 299 B1**
(45) Date of publication and mention of the grant of the patent: **24.11.2021**
(21) Application number: 17846742.9
(22) Date of filing: 04.09.2017
(51) Int. Cl.: B23K 11/00, B23K 11/11, B23K 11/18, H01M 50/543, H01M 4/66, B23K 11/34, B23K 11/36, B23K 101/18, B23K 101/36, B23K 101/38, B23K 103/10, B23K 103/12, B23K 103/18

(54) **METHOD FOR MANUFACTURING LAMINATED METAL FOIL**
VERFAHREN ZUR HERSTELLUNG EINER LAMINIERTEN METALLFOLIE
PROCÉDÉ DE FABRICATION DE FEUILLE MÉTALLIQUE STRATIFIÉE

(30) Priority: 05.09.2016 JP 2016173079
(43) Date of publication of application: 10.07.2019
(73) Proprietor: Nag System Co., Ltd., Settsu-shi, Osaka 566-0055 (JP)
(72) Inventor: ASADA, Takahiro, Settsu-shi Osaka 566-0055 (JP)
(74) Representative: Slingsby Partners LLP
(86) International application number: PCT/JP2017/031777
(87) International publication number: WO 2018/043739

(56) References cited:
- WO-A1-2014/112141
- JP-A- S50 133 946
- JP-A- 2006 326 622
- JP-A- 2014 000 594
- US-A1- 2008 087 650
- US-A1- 2015 318 535

## Description

The present invention relates to a method of manufacturing a laminated metal foil in which laminated metal foils are joined by resistance welding.

### (Description of Related Art)

Conventionally, resistance welding is known in which a welding electrode is brought into contact with a metallic welding material, to cause large current to flow while applying pressure, thereby forming a nugget (alloy layer) using resistance heat generation of the metal and thus making melted joining. Using the resistance welding, in manufacturing of a battery such as lithium ion battery, for example, metal foils that are an aluminum foil to which a positive electrode active material is applied and a copper foil to which a negative electrode active material is applied, and a separator are wound a plurality of times, whereby a laminated metal foil electrode body is manufactured.

In this case, a firm and insulating oxide film (aluminum oxide) exists on the aluminum surface, and it is known that resistance welding is performed after, using a perforating needle, a small hole is formed in laminated aluminum foils constituting a positive electrode foil (for example, Patent Document 1). By forming the small hole, the oxide film of the aluminum foil is removed and a passage of current is formed, whereby conductivity in resistance welding is improved.

On the other hand, regarding the laminated copper foils constituting the negative electrode foil, the surface of an electrolytic copper foil is subjected to roughening treatment (slight etching) in order to enhance adhesion between the copper foil and another conductor connected to the copper foil. The etching liquid, which is an insulating material, is slightly left in minute recesses formed on the copper foil surface by the roughening treatment. In a laminated body obtained by laminating the electrolytic copper foil having such an insulating material left in the surface thereof, current becomes less likely to pass along the lamination direction, thus making it further difficult to perform resistance welding. Therefore, also in this case, forming the above small hole is effective for improving conductivity.

In Patent Document 1, by resistance heat generation in resistance welding, a round-shaped nugget (alloy layer) centered on the small hole formed by the perforating needle is formed at the weld site of the laminated aluminum foils. In the case of increasing the number of laminated metal foils so as to increase the battery capacity, it is necessary to ensure a sufficient nugget area in order to reliably perform resistance welding. For the purpose of increasing the nugget area, it is assumed that a plurality of small holes are formed using a plurality of perforating needles, to perform resistance welding. However, after penetrating small holes are formed by sticking a plurality of perforating needles into the laminated metal foils, even if the perforating needles are attempted to be pulled out, it is difficult to pull them out because the small holes are formed in each of the stacked metal foils, and this can hamper improvement in production speed in resistance welding.

Accordingly, there is known a method for manufacturing laminated metal foil including: a first step of, by a cutter having a vertical sectional shape that is substantially a V shape, forming, at a weld site of laminated metal foils, a notch penetrating along the lamination direction and having a linear shape in a plan view, so as to bring the metal foils into close contact with each other in the lamination direction at linear notch ends; and a second step of, while bringing a welding electrode into pressure contact with the weld site, energizing the weld site via the electrode, to perform resistance welding of the laminated metal foils (for example, Patent Document 2). Thus, since the cutter has substantially a V shape, the cutter can be easily pulled out from the notch, whereby production efficiency can be improved.

### [Related Document]

### [Patent Document]

[Patent Document 1] JP Laid-open Patent Publication No. 2006-326622
[Patent Document 2] WO2014/112141

US 2015/0318535 A1 (base for the preamble of claim 1) describes a method of manufacturing a laminated metal foil. The method includes a first step of forming a linear notch in a weld site using a V-shaped cutter. The method includes a second step of bringing an electrode for resistance welding into press-contact with the weld site and then energizing the weld site via the electrode, to perform resistance welding on the laminated metal foil.

### SUMMARY OF THE INVENTION

However, in the conventional manufacturing method, when the notch is formed in the laminated metal foils, the outer periphery of the notch is raised in a loop shape to form a raised portion. If resistance welding is directly performed, the inside of a gap based on the notch between the welding electrode and an electrode terminal is heated, whereby the laminated metal of the notch inner wall is melted and scattered, and the scattered metal can adhere to the welding electrode. Thus, the life of the welding electrode is shortened, and as a result, the frequency of exchange of the welding electrode increases, and it takes time to perform the exchange each time, thus causing a problem that it is difficult to improve production efficiency in resistance welding. Therefore, a laminated metal foil manufacturing method that can easily improve production efficiency is desired.

The present invention has been made to solve the above problem, and an object of the present invention is to provide a method of manufacturing a laminated metal foil that suppresses scattering of melted metal in resistance welding and thus can improve production efficiency.

According to the present invention there is provided a method of manufacturing a laminated metal foil according to claim 1.

In the above configuration, by the forming step, the notch and the raised portion of the laminated metal foils are compressed in the lamination direction. Therefore, in the second step, spattering of melted metal from the notch inner surface is decreased owing to the compression of the notch and scattering thereof is suppressed. As a result, adhesion thereof to the welding electrode is decreased. Accordingly, it is possible to easily improve production efficiency by decreasing the frequency of exchange of the welding electrode.

Since the welding electrode can be assuredly brought into contact in a state in which the recess is formed and the notch is compressed, adhesion of the melted metal can be further decreased.

Preferably, in the second step, in a state in which the notch is compressed in the lamination direction by the forming step, an electrode terminal is further laminated on the weld site of the laminated layers of the metal foil and the welding electrode is brought into pressure contact with the electrode terminal, and in this state, the weld site and the electrode terminal are energized via the welding electrode, to perform resistance welding on the laminated metal foils and the electrode terminal so as to form a nugget having an elliptic shape extending in a longitudinal direction of the electrode terminal along the notch having the linear shape. In this case, even if the size in the width direction of the weld site is small, it is possible to ensure a nugget area having an elliptic shape extending in the longitudinal direction of the electrode terminal along the linear notch.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a sectional front view showing a laminated metal foil manufacturing method according to one embodiment of the present invention;
Fig. 1B is a perspective view showing a cutter;
Fig. 2 is a sectional front view showing the laminated metal foil manufacturing method;
Fig. 3 is a plan view showing a first step;
Fig. 4 is a sectional front view showing a second step;
Fig. 5 is a sectional front view showing the second step;
Fig. 6 is a perspective view showing the structure of a battery obtained using the laminated metal foil manufacturing method;
Fig. 7 is an enlarged view showing the second step;
Fig. 8 is an enlarged view showing a joining portion between a laminated metal foil and an electrode terminal;
Fig. 9 is a sectional front view showing a state that can occur in the first step;
Fig. 10 is an enlarged view showing a joining portion between the laminated metal foil and the electrode terminal in Fig. 9;
Fig. 11 is a sectional front view showing a state that can occur in the second step;
Fig. 12 is a flowchart showing a laminated metal foil manufacturing process;
Fig. 13 is a sectional front view showing a forming step; and
Fig. 14 is an enlarged view showing a joining portion between the laminated metal foil and the electrode terminal in Fig. 13.

### DESCRIPTION OF EMBODIMENTS

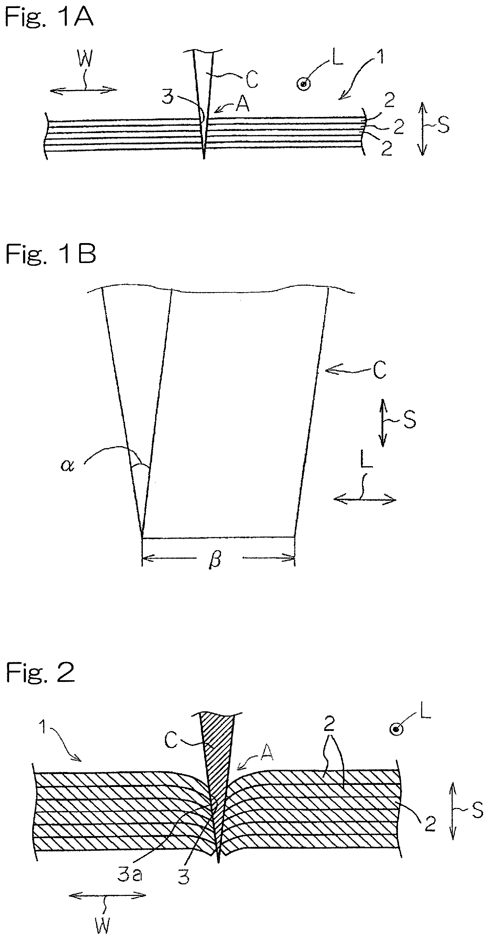

Hereinafter, embodiments of the present invention will be described with reference to the drawings. In a method of manufacturing a laminated metal foil according to one embodiment of the present invention, a laminated metal foil in the form of a plurality of laminated layers of a metal foil is manufactured through resistance welding. Fig. 1A shows a laminated state of a plurality of layers of metal foils 2, and the resultant laminated metal foil 1 having been subjected to resistance welding is used as an electrode body of a battery such as a lithium ion battery, for example. As the metal foils 2, for example, an aluminum foil may be used for a positive electrode foil, and a copper foil may be used for a negative electrode foil. As the electrode terminal, for example, aluminum may be used for the material of a positive electrode terminal, and copper may be used for the material of a negative electrode terminal. The present manufacturing method includes a forming step as well as a first step and a second step.

### First step

First, as shown in Fig. 1A, a cutter C is caused to penetrate a weld site A of the laminated metal foil 1 along a lamination direction S. Fig. 1B shows the cutter C having a longitudinal cross-sectional shape that is a substantially V shape. A blade tip angle α is not less than 10°, and preferably, not less than 15°. A blade length β is not less than 3 mm, and preferably, not less than 5 mm.

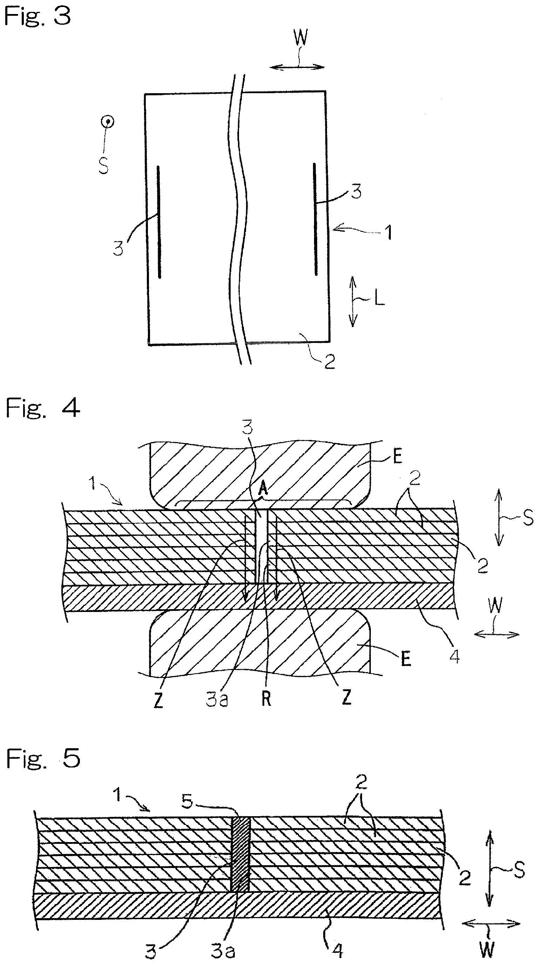

Next, as shown in Fig. 2, the cutter C is caused to penetrate the laminated metal foils 2 in the lamination direction S, to form a notch 3 (Fig. 3) having a linear shape in a plan view extending in a longitudinal direction L perpendicular to a width direction W of the laminated metal foil 1, whereby the metal foils 2 adjacent to each other in the vertical direction are caused to firmly and closely contact each other at notch ends 3a.

As shown in Fig. 3, in the first step, at both end portions (left and right in the drawing) in the width direction W of the metal foils 2, the linear notches 3 are formed so as to extend in the direction L perpendicular to the width direction W. Thus, it becomes possible to ensure sufficient areas for the notches 3 which are main parts of the weld sites A, without reducing the width-direction dimension of the center part in the width direction W of the metal foils excluding the weld sites A.

### Second step

In the second step, as shown in Fig. 4, at the weld site A centered on the notch 3, the laminated metal foil 1 is subjected to pressure contact with welding electrodes E, E of a resistance welding machine (not shown) by being pressed in a sandwich form by the welding electrodes E, E, and the weld site A is energized via the electrodes E, thereby performing resistance welding on the laminated metal foil 1. In the resistance welding, for example, energization is performed while an electrode terminal 4 is laminated on the laminated metal foil 1, whereby the laminated metal foil 1 and the electrode terminal 4 are welded. As shown in Fig. 5, by the resistance heat generation, a nugget (alloy layer) 5 is formed in the notch 3, whereby the laminated metal foil 1 and the electrode terminal 4 are melted and joined with each other. As shown in Fig. 4, current flows through a conduction part R in the lamination direction S (Z direction).

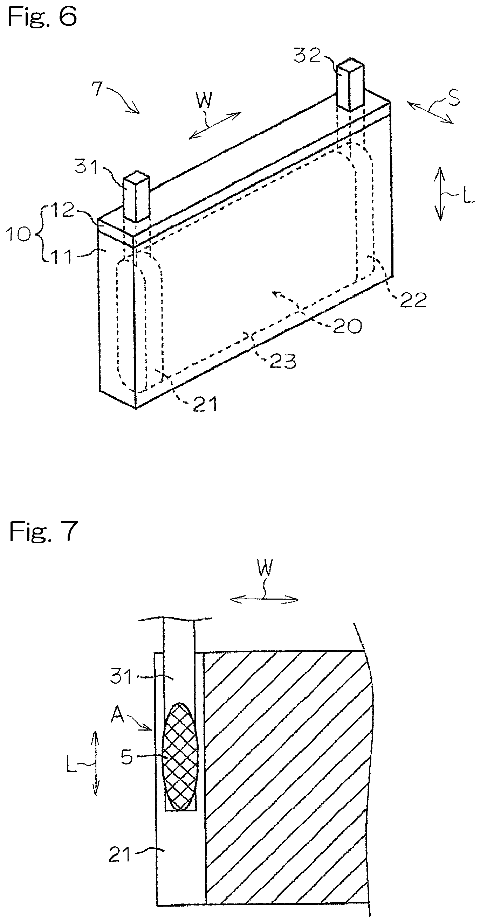

As shown in Fig. 6, for example, in manufacturing of a lithium ion battery 7, an electrode body 20 serving as an electric power generation element is accommodated in an exterior case 10. A positive electrode terminal 31 and a negative electrode terminal 32 which are electrode terminals connected to the electrode body 20 are provided at both ends in the width direction W so as to protrude in an outward direction (upward direction in the drawing) L of the exterior case 10. The electrode body 20 is a wound body obtained by winding a positive electrode foil 21 and a negative electrode foil 22 in a laminated manner with a separator 23 interposed therebetween.

An uncoated portion (collecting portion) of the positive electrode foil 21 and the positive electrode terminal 31 are joined with each other via the nugget (alloy layer) 5 formed by resistance heat generation in resistance welding. As shown in Fig. 7, the nugget 5 is formed in an elliptic shape extending in the longitudinal direction L at the weld site A (nugget formation allowable area) in the positive electrode foil 21 at which the positive electrode terminal 31 is welded to the positive electrode foil 21. Thus, even though the size in the width direction W of the weld site A is small, it is possible to ensure a nugget area having an elliptic shape extending in the longitudinal direction L of the positive electrode terminal 31 (electrode terminal) along the linear notch 3, whereby, in this example, the lithium ion battery 7 can be downsized.

In this drawing, joining between the positive electrode foil 21 made of aluminum and the positive electrode terminal 31 made of aluminum is shown as an example. However, the case of joining between the negative electrode foil 22 made of copper and the negative electrode terminal 32 made of copper is carried out in a similar way.

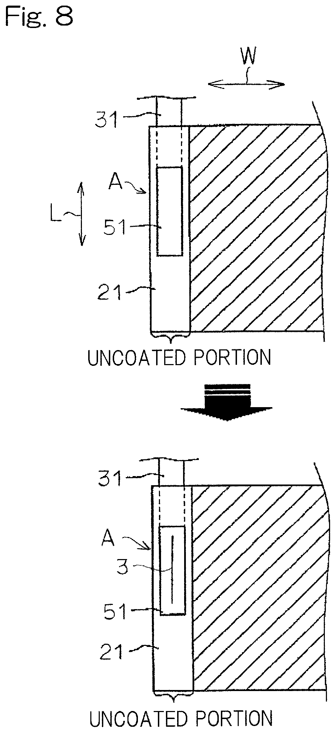

As shown in Fig. 8, in the first step, in a state in which the positive electrode foil 21 and the positive electrode terminal 31 are overlapped with each other and a pad plate 51 is placed on the outer side surface on the positive electrode foil 21 side, the cutter C having a longitudinal cross-sectional shape that is a substantially V shape for forming the notch 3 having a linear shape in a plan view is pressed thereon, whereby the notch 3 is formed in the pad plate 51 and the positive electrode foil 21. The notch 3 is linearly formed at the center in the width direction W of the uncoated portion. By forming the notch 3, a surface coating film of aluminum oxide existing on the surface of the positive electrode foil 21 can be removed. The part where the oxide film has been removed has a lower resistance than the other part, and therefore can be used as the conduction part R (Fig. 4) through which current easily flows in the second step. Also in the case of the negative electrode foil 22 made of copper, the conduction part R is formed in the same manner.

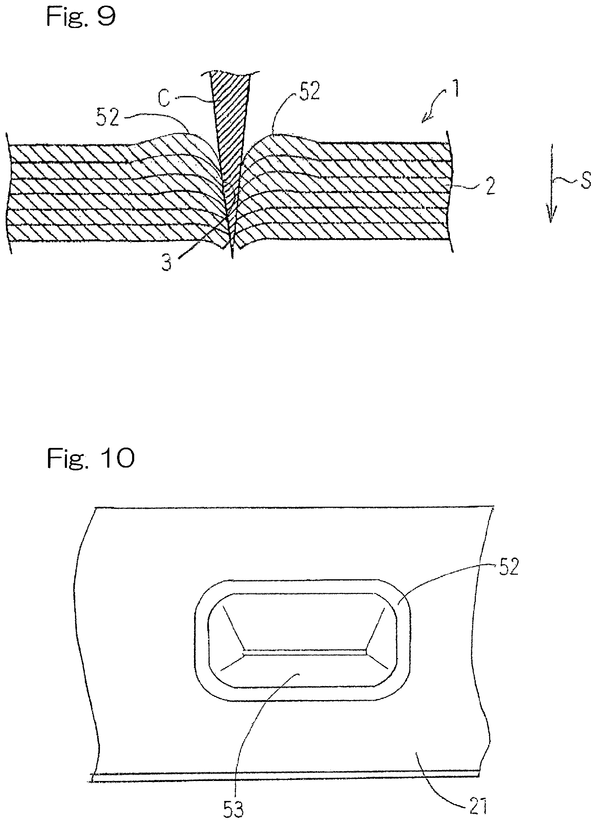

In the first step in Fig. 2, when the notch 3 penetrating the laminated metal foil 1 along the lamination direction S and having a linear shape in a plan view is formed by the cutter C, in actuality, the outer periphery of the notch 3 may be raised in a loop shape as shown in Fig. 9 to form a raised portion 52. Fig. 10 shows the raised portion 52 around the notch 3 when the notch 3 is provided in the positive electrode foil 21 of the battery.

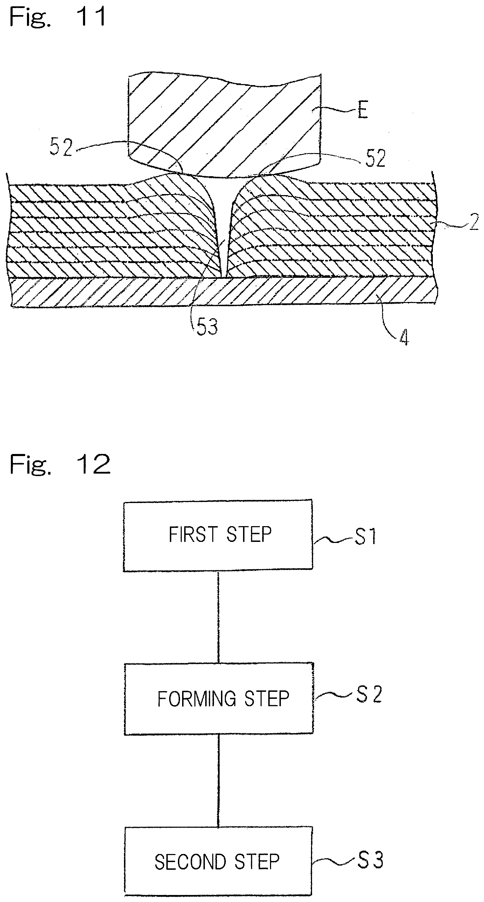

In this case, as shown in Fig. 11, in the second step, if the welding electrode E is directly brought into contact to perform resistance welding, the inside of a substantially triangular gap 53 based on the notch 3, which is formed between the end of the welding electrode E and the electrode terminal 4, is heated, whereby metal (e.g., aluminum) of the laminated metal foil that is exposed on the inner wall of the notch 3 is melted, and then spattered and scattered, so that the scattered metal can adhere to the end peripheral area of the welding electrode E. Thus, the welding electrode E is worn and the life thereof is shortened, and as a result, the frequency of exchange of the welding electrode E increases, and it takes time to perform the exchange each time. Thus, it becomes difficult to improve production efficiency.

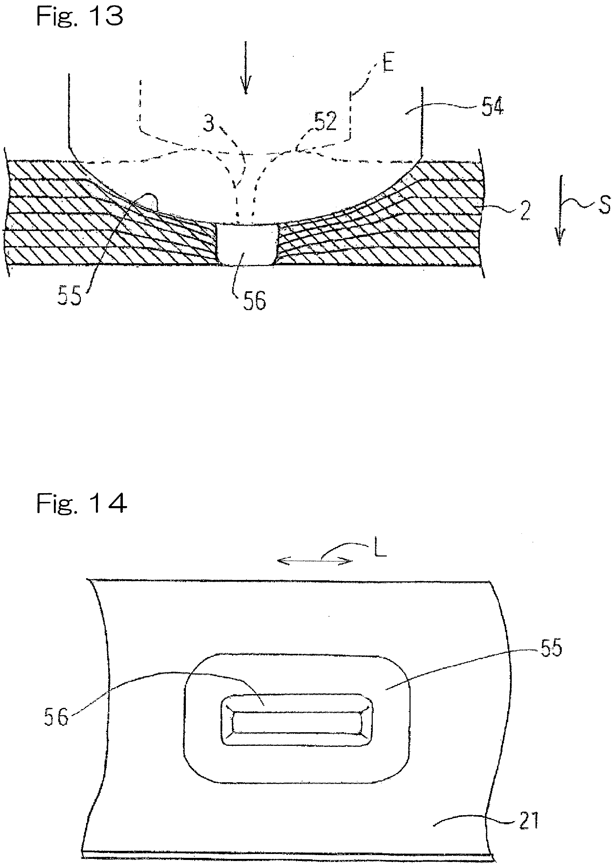

Accordingly, as shown in Fig. 12, between
the first step (S1) and the second step (S3), a forming step (S2) is provided in which a recess 55 is formed by crushing the notch 3 and the raised portion 52 around the notch and thus the notch 3 and the raised portion 52 are compressed in the lamination direction S. As shown in Fig. 13, after the notch 3 penetrating the laminated metal foil 1 along the lamination direction S and having a linear shape in a plan view is formed in the first step (S1), the recess 55 is formed by crushing the notch 3 and the raised portion 52 around the notch 3 in the forming step (S2), before joining is performed by resistance welding in the second step (S3).

As shown in Fig. 13, by a pressing body 54 having a pressing surface the area of which is slightly larger than the end area of the welding electrode E, the notch 3 and the raised portion 52 around the notch 3 are crushed to form the recess 55, and thus the notch 3 and the raised portion 52 are compressed in the lamination direction S. As a result, the gap 53 based on the notch 3 is compressed into a gap 56.

Thus, the distance between the welding electrode E and the electrode terminal 4 is shortened, so that spattering of the melted metal from the inner wall of the compressed gap 56 is decreased and scattering thereof is suppressed. As a result, the amount of adhesion thereof to the welding electrode E is decreased. In addition, since the welding electrode E can be assuredly brought into contact in a state in which the recess 55 is formed and the notch 3 is compressed, adhesion of the melted metal can be further decreased. Fig. 14 shows a state in which, in the case where the linear notch 3 is provided in the positive electrode foil 21 to be joined to the positive electrode terminal (electrode terminal), the recess 55 is formed by crushing the notch 3 and the raised portion around the notch, and the gap 56 is formed which is compressed in the lamination direction S and extends in the longitudinal direction L of the electrode terminal along the linear notch 3.

In this state, the welding electrode E is energized, and a nugget (alloy layer) 5 is formed in the gap 56 by resistance heat generation in resistance welding. Thus, even if the size in the width direction W of the weld site A of the laminated metal foil is small, the nugget 5 is formed in an elliptic shape extending in the longitudinal direction L of the electrode terminal along the notch 3, whereby a sufficient nugget area can be obtained.

As described above, by the forming step, the
weld site of the laminated metal foils is compressed in the lamination direction. Therefore, scattering of melted metal is suppressed and adhesion thereof to the welding electrode is decreased. Thus, it is possible to improve production efficiency by decreasing the frequency of exchange of the welding electrode. In addition, even if the size in the width direction of the weld site of the laminated metal foil is small, it is possible to ensure a nugget area having an elliptic shape extending in the longitudinal direction of the electrode terminal along the linear notch.

Although the present invention has been fully described in connection with the preferred embodiments thereof with reference to the accompanying drawings, those skilled in the art will readily conceive numerous changes and modifications within the framework of obviousness upon the reading of the specification herein presented of the present invention. Accordingly, such changes and modifications are to be construed as included in the scope of the invention defined by claims annexed thereto.

### [Reference Numerals]

- 1: Laminated metal foil
- 2: Metal foil
- 3: Notch
- 3a: Notch end
- 4: Electrode terminal
- 5: Nugget
- 20: Electrode body
- 52: Raised portion
- 53: Gap
- 54: Pressing body
- 55: Recess
- 56: Gap
- a: Weld site
- E: Welding electrode
- S: Lamination direction of metal foil

## Claims

1. A method of manufacturing a laminated metal foil (1), comprising:
a first step of forming, at a weld site (A) of laminated layers of a metal foil (2), by the use of a cutter (C) having a longitudinal cross-sectional shape that is a substantially V shape, a notch (3) penetrating the laminated layers of the metal foil along a lamination direction (S) and having a linear shape in a plan view, to cause the laminated layers of the metal foil closely contact each other in the lamination direction at an end of the notch having the linear shape; and
a second step of bringing a welding electrode (E) into pressure contact with the weld site and then energizing the weld site via the welding electrode, to perform resistance welding on the laminated metal foil,
**characterised in that** the method comprises
a forming step, that is performed between the first step and the second step, of crushing the notch formed in the first step and a raised portion (52) formed around the notch, to form a recess (55) to thereby compress the notch and the raised portion in the lamination direction;
wherein
a pressing area of a pressing body (54) for forming the recess in the forming step is set to be larger than an end area of the welding electrode in the second step.

2. The method as claimed in claim 1, wherein
in the second step, in a state in which the notch (3) is compressed in the lamination direction (S) by the forming step, an electrode terminal (4) is further laminated on the weld site (a) of the laminated layers of the metal foil and the welding electrode (E) is brought into pressure contact with the electrode terminal, and in this state, the weld site and the electrode terminal are energized via the welding electrode, to perform resistance welding on the laminated metal foils and the electrode terminal so as to form a nugget (5) having an elliptic shape extending in a longitudinal direction of the electrode terminal along the notch having the linear shape.

## Patentansprüche

1. Verfahren zur
Herstellung einer laminierten Metallfolie (1), umfassend:
einen ersten Schritt des Formens, an einer Schweißstelle (A) von laminierten Schichten einer Metallfolie (2), durch Verwendung eines Schneidwerkzeugs (C), das eine Längsquerschnittsform aufweist, die im Wesentlichen eine V-Form ist, einer Kerbe (3), die die laminierten Schichten der Metallfolie entlang einer Laminierungsrichtung (S) durchdringt und eine lineare Form in einer Draufsicht aufweist, um zu bewirken, dass die laminierten Schichten der Metallfolie in der Laminierungsrichtung an einem Ende der die lineare Form aufweisenden Kerbe miteinander eng in Kontakt sind; und
einen zweiten Schritt des Bringens einer Schweißelektrode (E) in Druckkontakt mit der Schweißstelle und des anschließenden Erregens der Schweißstelle mittels der Schweißelektrode, um Widerstandsschweißen an der laminierten Metallfolie durchzuführen, **dadurch gekennzeichnet, dass** das Verfahren umfasst
einen Formungsschritt, der zwischen dem ersten Schritt und dem zweiten Schritt durchgeführt wird, zum Quetschen der in dem ersten Schritt geformten Kerbe und eines um die Kerbe herum geformten erhöhten Abschnitts (52), um eine Vertiefung (55) zu formen, um dadurch die Kerbe und den erhöhten Abschnitt in der Laminierungsrichtung zusammenzudrücken;
wobei
ein Pressbereich eines Anpresskörpers (54) zum Formen der Vertiefung in dem Formungsschritt so eingestellt ist, dass er in dem zweiten Schritt größer als ein Endbereich der Schweißelektrode ist.

2. Verfahren nach Anspruch 1, wobei:
in dem zweiten Schritt, in einem Zustand, in dem die Kerbe (3) in der Laminierungsrichtung (S) durch den Formungsschritt zusammengedrückt wird, ein Elektrodenanschluss (4) ferner auf die Schweißstelle (a) der laminierten Schichten der Metallfolie laminiert wird und die Schweißelektrode (E) in Druckkontakt mit dem Elektrodenanschluss gebracht wird und, in diesem Zustand, die Schweißstelle und der Elektrodenanschluss mittels der Schweißelektrode erregt werden, um Widerstandsschweißen an den laminierten Metallfolien und
dem Elektrodenanschluss durchzuführen, um so einen Klumpen (5) zu formen, der eine elliptische Form aufweist, die sich in einer Längsrichtung des Elektrodenanschlusses entlang der die lineare Form aufweisenden Kerbe erstreckt.

## Revendications

1. Procédé de fabrication d'une feuille métallique stratifiée (1), comprenant :
une première étape de formage, au niveau d'un site de soudure (A) de couches stratifiées d'une feuille métallique (2), à l'aide d'un élément coupant (C) possédant une forme en coupe transversale longitudinale qui est sensiblement en forme de V, d'une entaille (3) pénétrant les couches stratifiées de la feuille métallique le long d'une direction de stratification (S) et présentant une forme linéaire dans une vue en plan, pour amener les couches stratifiées de la feuille métallique en contact étroit les unes avec les autres dans la direction de stratification au niveau d'une extrémité de l'entaille présentant la forme linéaire ; et
une seconde étape de mise en contact sous pression d'une électrode de soudage (E) avec le site de soudage et ensuite d'excitation du site de soudage par l'intermédiaire de l'électrode de soudage, pour réaliser un soudage par résistance sur la feuille métallique stratifiée, **caractérisé en ce que** le procédé comprend
une étape de formage, qui est réalisée entre la première étape et la seconde étape, d'écrasement de l'entaille formée dans la première étape et d'une partie surélevée (52) formée autour de l'entaille, pour former un évidement (55) afin de comprimer ainsi l'entaille et la partie surélevée dans la direction de stratification ;
une zone de pression d'un corps de pression (54) destiné à former l'évidement dans l'étape de formage étant réglée pour être plus grande qu'une zone d'extrémité de l'électrode de soudage dans la seconde étape.

2. Procédé selon la revendication 1,
dans la seconde étape, dans un état dans lequel l'entaille (3) est comprimée dans la direction de stratification (S) par l'étape de formage, une borne d'électrode (4) étant en outre stratifiée sur le site de soudure (a) des couches stratifiées de la feuille métallique et ladite électrode de soudage (E) étant mises en contact sous pression avec la borne d'électrode, et dans cet état, ledit site de soudage et ladite borne d'électrode étant alimentés par l'intermédiaire de l'électrode de soudage, pour réaliser un soudage par résistance sur les feuilles métalliques stratifiées et
la borne d'électrode de façon à former une pépite (5) possédant une forme elliptique s'étendant dans une direction longitudinale de la borne d'électrode le long de l'entaille présentant la forme linéaire.
